# EUROPEAN PATENT SPECIFICATION

(11) **EP 3 038 847 B1**
(45) Date of publication and mention of the grant of the patent: **05.08.2020**
(21) Application number: 14777898.9
(22) Date of filing: 28.08.2014
(51) Int. Cl.: B60J 1/20

(54) **SCREEN SYSTEM AND GUIDE PROFILE**
SCHIRMSYSTEM UND FÜHRUNGSPROFIL
SYSTÈME D'ÉCRAN ET PROFIL DE GUIDAGE

(30) Priority: 29.08.2013 NL 2011355
(43) Date of publication of application: 06.07.2016
(73) Proprietor: Polyplastic Group B.V., 3044 EN Rotterdam (NL)
(72) Inventor: VEENEMAN, Jan Peter, 2661 LW Bergschenhoek (NL)
(74) Representative: Jilderda, Anne Ayolt
(86) International application number: PCT/NL2014/050586
(87) International publication number: WO 2015/030588

(56) References cited:
- EP-A1- 0 735 229
- DE-U1-202007 003 598
- DE-U1-202008 011 462
- DE-U1-202008 011 462

## Description

The present invention relates to a screen system for positioning a screen, in particular a screen blind, for a window in a wall, comprising a screen and adjusting means for adjusting the screen longitudinally between a position leaving the window clear and a position at least substantially wholly screening the window, and comprising on either longitudinal side of the screen a guide profile which comprises a guide track through which the screen is longitudinally guidable for adjustment thereof.

Screen systems of the above described type are applied to selectively enable screening of windows, such as for instance a wall opening with a window or door, with a screen suitable for the purpose. Although use is often made here of a screen blind in particular as shading means in order to limit a quantity of light admitted through the window into a space located behind the window, other types of screen are also applied, such as for instance a mesh screen with which it is possible to prevent insects, other types of small organism or other undesirable matter such as dirt being able to enter, via the open window, the space lying behind the window. Diverse types of screen system applied for windows provided in buildings fall within the scope of the present invention, although the invention relates particularly to screen systems as applied for windows in (mobile) accommodation such as a caravan, camper or boat.

Known screen systems**,** like the system disclosed in EP0735229 A1 make use of a screen which is longitudinally adjustable by means of adjusting means between a position leaving the window clear and a position wholly screening the window. The adjusting means usually comprise here a so-called roller blind wherein the screen is rolled fully round a tube in the position leaving the window clear, and wherein the tube is rotatable for the purpose of unrolling the screen therefrom into the position wholly screening the window. For a suitable tensioning of the screen, wherein the screen is adjustable in neatly stretched manner, the screen is enclosed on either side between a set of guide profiles. The guide profiles comprise a guide track in which an edge of the screen is longitudinally guidable, optionally via guide means intended for this purpose, so that the screen can be adjusted. Fixation means are optionally also provided which can fix the screen in any desired position between the rolled-up position leaving the window clear and the unrolled position wholly screening the window. The guide profiles further comprise an attaching part with which the guide profiles can be attached to a wall in which the window is provided.

The known screen systems have the drawback that the guide profiles are attached in clearly visible manner against the wall in which the associated window for screening is provided and, because of the structural parts incorporated therein such as the guide track, moreover have a considerable thickness here compared to a thickness of the screen itself. The guide profiles thus take up much space and are conspicuous, whereby the known screen system gives an overall aesthetically inelegant and cheap impression.

The present invention has for its object to obviate this drawback and to thus provide a screen system wherein there is no loss of functionality but wherein a space taken up by the screen system is utilized more efficiently and wherein the whole creates an aesthetically attractive impression.

In order to obviate the stated drawback a screen system according to the features of claim 1 is proposed.

The present invention further relates to a guide profile as applied in or applicable in an above described screen system.

Because the edge part is provided on the opposite side of the profile, it maintains a distance from the wall when the screen system is attached against the wall. The free space thus available between the wall and the edge part is conveniently utilized for the purpose of placing desired additional aesthetic or functional means which are themselves concealed from view here.

At least one of the profiles is thus provided with a light source which, when the screen system is applied, is provided in a space between the wall and the edge part. By switching on the light source light can be cast here on the wall behind and round the screen system, this imparting a stylish appearance to the whole. Even without such a light source, the free edge part still also forms a particular embellishment of the whole. Because the edge part extends laterally relative to the attaching part, it removes the attaching part from view from practically all lines of sight, whereby the screen system creates the optical impression of floating separately relative to the wall. Such an impression is more attractive than the usual impression created by the known screen systems when attached directly against the wall.

In a further preferred embodiment the screen system according to the present invention is characterized in that the adjusting means are provided in a profile which extends between the guide profiles and is coupled on either side to an outer end thereof, wherein the profile comprises an attaching part and an edge part which extends laterally relative to the attaching part. A particular embodiment of the screen system has the feature according to the present invention that opposite the profile there is provided a further profile comprising an attaching part and an edge part which extends laterally relative to the attaching part, wherein the profiles form together a fully continuous frame all around the screen.

When a light source is placed behind the edge part, a further particular embodiment of the screen system according to the present invention is in this case characterized in that the light source comprises an LED strip provided all around the window. A ring of light can thus be provided all around the window on the wall behind the screen system by the LED strip, whereby attention is diverted away from the profiles and an aesthetically extremely attractive overall impression is created.

In a further preferred embodiment the screen system according to the present invention has the feature that the edge part is oriented in the direction of the wall side and encloses an acute angle with a remaining part of the profile. The acute angle provides a suitable space enabling placing therein of the desired means, such as a light source. The edge part thus running obliquely in the direction of the wall here conceals such means substantially wholly from view, even from a lateral line of sight.

A further preferred embodiment of the screen system according to the present invention is characterized in that the edge part has a curved surface on the visible opposite side. The curved surface of the edge part on the visible screen side imparts a less angular, and thereby less solid impression to the whole, this resulting in a further improvement in respect of the aesthetic properties of the screen system.

The invention will now be further elucidated on the basis of an exemplary embodiment and an accompanying drawing. In the drawing:

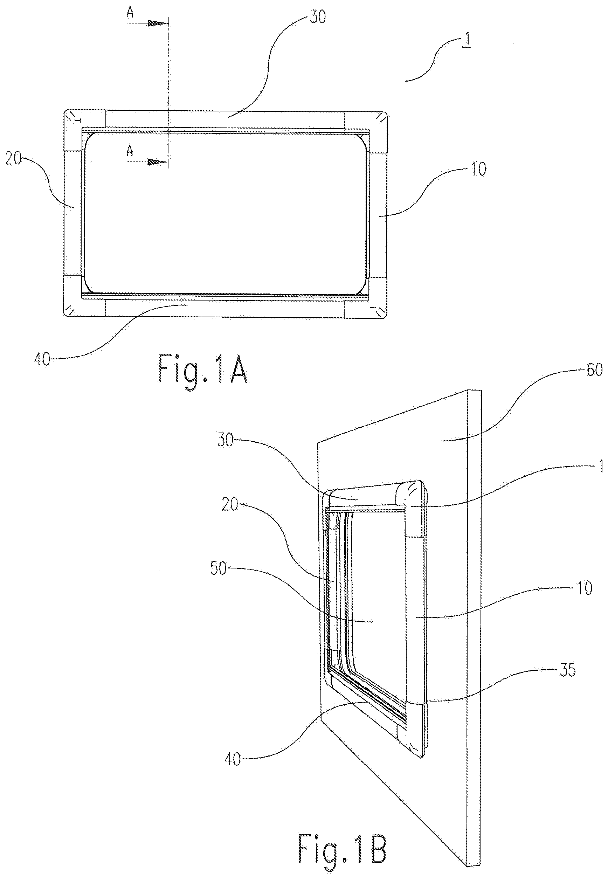

- figure 1A: is a front view of an exemplary embodiment of the screen system according to the invention for use with a window in a wall;
- figure 1B: is a perspective view of the exemplary embodiment of the screen system according to the invention used for a window in a wall; and

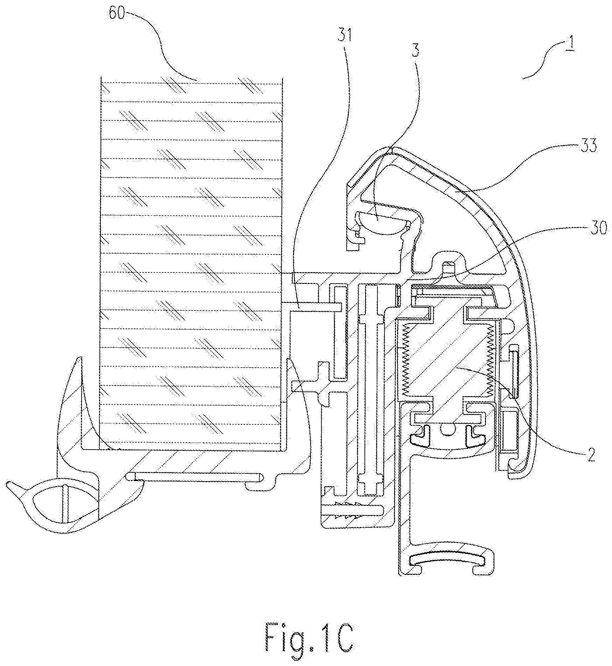

- figure 1C: is a detailed cross-sectional view of the exemplary embodiment of the screen system according to the invention along line A-A in figure 1A.

The figures are otherwise purely schematic and not drawn to scale. Some dimensions in particular may be exaggerated to greater or lesser extent for the sake of clarity. Corresponding parts are designated as far as possible in the figures with the same reference numeral.

As shown in the figures, screen system 1 according to the present invention comprises a number of profiles which together form a frame all around a window 50 provided in a wall 60. Provided laterally of the window are a set of guide profiles 10,20, each comprising a guide track through which a screen 2 is movable with lateral sides. Screen 2 can hereby be adjusted between a position leaving the window clear, wherein the screen is fully folded inside a cavity in profile 30 (see figure 1C), and a position screening the window wherein the screen extends in the direction of a further profile 40 lying opposite profile 30.

Provided in further profile 40 are fixation means for the purpose of fixing the screen in the position screening the window. Further fixation means which can fix screen 2 in a number of positions lying between the position leaving the window clear and the position screening the window can be provided in the screen system, for instance in guide profiles 10,20. Making use of continuously adjustable fixation means even makes it possible here for the screen to be fixed in any desired position.

For attachment against the wall the profiles are each provided with an attaching part. Profile 30 thus comprises an attaching part 31 with which the profile is attachable, optionally via an attaching means, to the wall. In this exemplary embodiment attaching part 31 is connected to the wall by means of a clamping member which drops clampingly round a wall opening edge in wall 60 so that penetrating means such as screws, which adversely affect the integrity of the wall, need not be applied.

It is important that profiles 10,20,30,40 each comprise on the visible opposite side an edge part which extends laterally relative to the window from a remaining part of the profile and the attaching part. Thus shown in detail in figure 1C is that profile 30 comprises an edge part 33 which extends laterally from a remaining part of profile 30. Because edge part 33 extends freely from a remaining part of the profile, i.e. protrudes laterally relative to the other part of the profile, and maintains a distance from an attaching part 31 of the profile, a space is present between edge part 33 and the wall 60 when the screen system is in use. The space occupied by the screen system can be utilized efficiently by providing functional means in the space, and can also be utilized to embellish the aesthetic character of the screen system.

In this exemplary embodiment an LED strip 3 is thus provided on the side of edge part 33 facing in the direction of wall 60 which is able and configured to radiate light of a desired colour spectrum onto wall 60 so that a ring of light is created round the window which imparts a higher quality appearance to the window. The presence of the space between the edge part and the wall, wherein the attaching part of the profile against the wall is not readily visible, moreover creates the optical illusion that the screen system is separate of the wall, or the effect that it is 'floating' in front of the wall. This further enhances the aesthetic appearance of the screen system, irrespective of whether the light source is applied.

The less attractive LED strip itself is not visible from a front line of sight because it is placed against the side of edge part 33 facing toward the wall. Because edge part 33 extends at something of an incline in the direction of the wall, i.e. lies at an angle relative to a remaining part of the profile, means placed in the space are further concealed from view.

Edge part 33 comprises on a visible side remote from the side facing toward wall 60 a curved surface, i.e. a wall of edge part 33 extending between a remaining part of the profile and an outer end of the edge part is gently curved. The curved surface imparts a less inelegant impression compared to the usually more angular profiles, so that the screen system as a whole has an exceptionally attractive appearance.

Although the invention has been further elucidated with reference to only a few exemplary embodiments, it will be apparent that the invention is by no means limited thereto. On the contrary, many other variations and embodiments are possible within the scope of the invention for the person with ordinary skill in the art. Instead of a folded or pleated screen as shown in figure 1C, use can thus also be made of a rollable screen which in the position leaving the window clear is rolled up round a rotatable roller member and in the position screening the window is unrolled from the roller member, i.e. a so-called roller blind system.

Instead of using a frame arranged all the way around the window it is further also possible to make use of only two guide profiles provided laterally of the window, or of two guide profiles provided laterally of the window and mutually coupled on one side by a further profile.

## Claims

1. Screen system (1) for positioning a screen, in particular a screen blind, for a window in a wall (60), comprising a screen (2) and adjusting means for adjusting the screen longitudinally between a position adapted to leave the window clear and a position at least substantially wholly adapted to screen the window, and comprising on either longitudinal side of the screen a guide profile (10,20) which comprises a guide track through which the screen is longitudinally guidable for adjustment thereof, wherein the guide profiles each contain on a side facing toward the wall an attaching part (31) for an attachment against the wall and on a side facing away from said wall an edge part (33) extending laterally relative to the attaching part away from said window while leaving a space with respect to said wall, **characterized in that** the guide profiles (10, 20) are provided with a light source (3) between the wall (60) and the edge part (33).

2. Screen system as claimed in claim 1, **characterized in that** the adjusting means are provided in a profile (30) which extends between the guide profiles (10,20) and is coupled on either side to an outer end thereof, wherein the profile comprises an attaching part (31) and an edge part (33) which extends laterally relative to the attaching part.

3. Screen system as claimed in claim 2, **characterized in that** opposite the profile there is provided a further profile (40) comprising an attaching part and an edge part which extends laterally relative to the attaching part, wherein the profiles (10,20,30,40) form together a fully continuous frame all around the screen.

4. Screen system as claimed in one or more of the preceding claims, **characterized in that** the edge part (33) is oriented in the direction towards the wall at an acute angle with a remaining part of the profile.

5. Screen system as claimed in one or more of the preceding claims, **characterized in that** the edge part (33) has a curved surface on the visible side.

6. Screen system as claimed in one or more of the preceding claims, **characterized in that** the light source comprises an LED strip and is provided all around the window.

7. Guide profile as applied in the screen according to one or more of the preceding claims, comprising an attaching part for an attachment against a wall adjacent a window and an edge part extending laterally relative to the attaching part away from said window while, in use, leaving a space with respect to said wall.

## Patentansprüche

1. Schirmsystem (1) zur Positionierung eines Schirms (2), vornehmlich einer Schirmblende, für ein in einer Wand (60) angeordnetes Fenster; umfassend:
einen Schirm (2) und Stellmittel zur Längsverstellung des Schirms (2) zwischen einer ersten Position, an welcher der Schirm (2) dazu eingerichtet ist das Fenster frei zu lassen und einer zweiten Position, an welcher der Schirm (2) dazu eingerichtet ist das Fenster wenigstens im Wesentlichen vollständig zu verdecken; und
umfassend ein Führungsprofil (10, 20) an beiden Längsseiten des Schirms (2), welches eine Führungsschiene aufweist, mit der der Schirm (2) in Längsrichtung zum Einstellen führbar ist; wobei
die Führungsprofile (10, 20) jeweils auf einer der Wand (60) zugewandten Seite ein Befestigungselement (31) zum Befestigen an der Wand (60) umfassen, und auf einer der besagten Wand (60) abgewandten Seite einen Randstreifen (33) umfassen, welcher sich seitlich relativ zum Befestigungselement (31) unter Einhalten eines Abstands zu besagter Wand (60) von besagtem Fenster weg erstreckt,
**dadurch gekennzeichnet, dass**
die Führungsprofile (10, 20) mit einer Leuchtquelle (3) zwischen der Wand (60) und dem Randstreifen (33) ausgestattet sind.

2. Schirmsystem (1) gemäß Anspruch 1,
**dadurch gekennzeichnet, dass**
die Stellmittel in einem Profil (30) angeordnet sind, welches sich zwischen den Führungsprofilen (10, 20) erstreckt und an beiden Seiten mit einem äußeren Ende damit verbunden ist, wobei das Profil (30) ein Befestigungselement (31) und einen Randstreifen (33) umfasst, welcher sich seitlich relativ zum Befestigungselement (31) erstreckt.

3. Schirmsystem (1) gemäß Anspruch 2,
**dadurch gekennzeichnet, dass**
gegenüber dem Profil (30) ein weiteres Profil (40) vorgesehen ist, umfassend ein Befestigungselement und einen Randstreifen, welcher sich seitlich relativ zum Befestigungselement erstreckt, wobei die Profile (10, 20, 30, 40) zusammen einen vollständig durchgehenden Rahmen um den Schirm (2) ausbilden.

4. Schirmsystem (1) gemäß einem der vorhergehenden Ansprüche,
**dadurch gekennzeichnet, dass**
der Randstreifen (33) in Richtung der Wand (60) unter einem spitzen Winkel zu einem restlichen Teil des Profils ausgerichtet ist.

5. Schirmsystem (1) gemäß einem der vorhergehenden Ansprüche,
**dadurch gekennzeichnet, dass**
der Randstreifen (33) auf einer sichtbaren Seite eine gekrümmte Oberfläche aufweist.

6. Schirmsystem (1) gemäß einem der vorhergehenden Ansprüche,
**dadurch gekennzeichnet, dass**
die Leuchtquelle (3) einen LED-Streifen umfasst und rundherum um das Fenster angeordnet ist.

7. Führungsprofil (10, 20) wie es bei einem Schirm (2) nach einem der vorhergehenden Ansprüche zur Anwendung kommt, umfassend:
ein Befestigungselement (31) zum Befestigen an einer an ein Fenster angrenzenden Wand (60) und einen Randstreifen (33) welcher sich seitlich relativ zum Befestigungselement (31) von besagtem Fenster weg erstreckt, wobei er, im Betrieb, einen Abstand zu besagter Wand (60) einhält.

## Revendications

1. Système d'écran (1) permettant de positionner un écran, en particulier un store, pour une fenêtre dans une paroi (60), comprenant un écran (2) et des moyens de réglage pour ajuster l'écran longitudinalement entre une position permettant de laisser la fenêtre dégagée et une position permettant au moins presque complètement de masquer la fenêtre, et comprenant longitudinalement de part et d'autre de l'écran un profil de guidage (10, 20) qui comprend un rail de guidage dans lequel l'écran peut être guidé longitudinalement afin d'être ajusté, les profils de guidage contenant chacun sur un côté faisant face à la paroi une pièce de fixation (31) à des fins de fixation contre la paroi et sur un côté orienté à l'opposé de ladite paroi un rebord (33) s'étendant latéralement par rapport à la pièce de fixation à l'opposé de ladite fenêtre tout en laissant un espace par rapport à ladite paroi, **se caractérisant en ce que** les profils de guidage (10, 20) sont pourvus d'une source de lumière (3) entre la paroi (60) et le rebord (33).

2. Système d'écran selon la revendication 1, **se caractérisant en ce que** les moyens de réglage sont prévus dans un profil (30) qui s'étend entre les profils de guidage (10, 20) et est couplé de chaque côté à une extrémité extérieure du système, le profil comprenant une pièce de fixation (31) et un rebord (33) qui s'étend latéralement par rapport à la pièce de fixation.

3. Système d'écran selon la revendication 2, **se caractérisant en ce que** à l'opposé du profil un autre profil est prévu (40) qui comprend une pièce de fixation et un rebord qui s'étend latéralement par rapport à la pièce de fixation, les profils (10, 20, 30, 40) formant ensemble un cadre totalement continu tout autour de l'écran.

4. Système d'écran selon une ou plusieurs des revendications précédentes, **se caractérisant en ce que** le rebord (33) est orienté vers la paroi en formant un angle aigu avec une partie restante du profil.

5. Système d'écran selon une ou plusieurs des revendications précédentes, **se caractérisant en ce que** le rebord (33) possède une surface incurvée sur le côté visible.

6. Système d'écran selon une ou plusieurs des revendications précédentes, **se caractérisant en ce que** la source de lumière comprend une bande LED et est disposée tout autour de la fenêtre.

7. Profil de guidage tel qu'appliqué dans l'écran selon une ou plusieurs des revendications précédentes, comprenant une pièce de fixation à des fins de fixation contre une paroi adjacente à une fenêtre et un rebord s'étendant latéralement par rapport à la pièce de fixation à l'opposé de ladite fenêtre tout en laissant, en utilisation, un espace par rapport à ladite paroi.
